# FASCICULE DE BREVET EUROPEEN

(11) **EP 4 371 731 B1**
(45) Date de publication et mention de la délivrance du brevet: **05.11.2025**
(21) Numéro de dépôt: 24168776.3
(22) Date de dépôt: 13.08.2019
(51) Int. Cl.: B29B 11/14, B29C 49/06, B29L 31/00

(54) **PRÉFORME POUR RÉCIPIENT EN MATIÈRE PLASTIQUE**
VORFORMLING FÜR KUNSTSTOFFBEHÄLTER
PREFORM FOR PLASTIC CONTAINER

(30) Priorité: 04.09.2018 FR 1857911
(43) Date de publication de la demande: 22.05.2024
(62) Demande divisionnaire de: 19772782.9
(73) Titulaire: SIDEL PARTICIPATIONS, S.A.S., 76930 Octeville-sur-Mer (FR)
(72) Inventeur: BUNEL, Christophe, 76930 OCTEVILLE-SUR-MER (FR); NAVEAU, Laurent, 76930 OCTEVILLE-SUR-MER (FR)
(74) Mandataire: Sidel Group

(56) Documents cités:
- EP-A1- 2 316 626
- WO-A1-2010/027667
- WO-A1-2011/045739
- WO-A1-90/04543
- DE-A1- 102013 011 315
- GB-A- 2 048 757
- JP-A- S54 146 870
- US-A1- 2014 030 461

## Description

Le domaine de l'invention est celui de la conception et de la fabrication de récipients en matière plastique à partir de préformes.

Plus précisément, l'invention concerne une préforme présentant un fond ayant des propriétés permettant l'obtention de récipients de qualité.

Les préformes sont obtenues par injection de leur matière constitutive dans un moule d'injection et comprennent chacune, de façon connue :
- un corps présentant une paroi latérale cylindrique de révolution autour d'un axe de révolution de la préforme ;
- à une première extrémité du corps, un col séparé du corps par une collerette, le col étant destiné à former un buvant du récipient final et à recevoir un élément de fermeture du récipient (par exemple un bouchon), le col injecté ne subissant aucune modification durant le processus de formage du récipient ;
- à une deuxième extrémité du corps, opposée à la première, un fond qui ferme le corps, le fond étant destiné à former le fond du récipient sur lequel ce dernier repose.

Le corps et le fond de la préforme se rejoignent en un plan de jonction qui est sensiblement perpendiculaire à l'axe de révolution de la préforme.

Classiquement, un récipient en matière plastique est obtenu par soufflage (combiné dans la majorité des cas à une étape d'étirage) d'une préforme dans un moule présentant une cavité interne à la forme du récipient final à obtenir.

Plus précisément, les préformes sont d'abord chauffées dans un four pour être ramollies. A cet effet, la chauffe est telle que la température de la matière des préformes dépasse de quelques dizaines de degrés la température de transition vitreuse (Tg) de leur matériau constitutif (la préforme est par exemple chauffée à approximativement 120°C pour le PET (*PolyEthylene Terephthalate*) dont la Tg est de 70°-77°C). Ensuite, les préformes sont disposées dans un moule pour une étape de formage durant laquelle les préformes sont soufflées jusqu'à former le récipient final.

Lors du soufflage, de l'air sous pression est injecté dans la préforme de sorte que sa matière constitutive flue dans le moule jusqu'à venir au contact de la cavité interne du moule contre laquelle elle est maintenue temporairement.

Lorsque, comme dans la majorité des cas, les récipients sont fabriqués par une combinaison d'étirage et de soufflage, une tige dite tige d'élongation ou tige d'étirage est insérée dans la préforme pour étirer cette dernière vers le fond du moule, en plus de l'injection d'air sous pression dans la préforme.

Lors du formage (par soufflage ou étirage-soufflage), il peut arriver que la matière ne flue pas correctement dans le moule. Le récipient obtenu peut alors présenter des défauts de structure le fragilisant et/ou le rendant non conforme aux qualités mécaniques et esthétiques recherchées. Ces défauts de formage peuvent notamment provoquer la génération de fissurations sur certaines zones du fond du récipient.

Ces fissurations, au départ non débouchantes, peuvent, à plus ou moins long terme et selon le type de produit conditionné dans le récipient, se développer jusqu'à générer des fuites de produit à l'extérieur du récipient ou même, dans certains cas extrêmes, faire éclater le fond du récipient.

Cela est particulièrement vérifié lorsque le récipient est destiné à recevoir des boissons fortement carbonatées de type « soda ». Par ailleurs l'utilisation de produits chimiques lubrifiants des lignes de convoyage post formage, venant au contact du récipient formé, peuvent accroître les risques d'éclatement du fond du récipient.

En effet, un récipient contenant un liquide ou une boisson carbonatée présente généralement un fond de type pétaloïde, c'est-à-dire un fond présentant à sa périphérie une succession de bosses et de vallées. Les bosses forment notamment des pieds sur lesquels repose le récipient une fois rempli.

Lorsque le fond présente des fissurations, celles-ci sont généralement situées sur des bords internes des pieds, est plus particulièrement à la jonction des pieds avec une portion centrale du fond du récipient.

Il est également possible que des fissurations apparaissent au niveau du centre du fond, qui correspond au point d'injection de la matière dans le moule d'injection lors de la fabrication, par moulage, de la préforme.

C'est dans cette partie qu'une forte concentration de contraintes existe. Dans le cas de liquides carbonatés, la concentration de contraintes est notamment due à la présence du carbone dans la boisson qui crée une pression gazeuse.

Or, une mauvaise répartition de matière dans le fond d'un récipient formé (par exemple trop de matière dans certaines zones ou, au contraire, trop peu de matière dans d'autres zones) ne permet pas au fond du récipient de résister à cette concentration de contraintes.

Ainsi, lorsque le récipient est rempli puis bouché, le gaz contenu dans la boisson présente un risque pour la tenue mécanique du récipient, notamment si ce dernier subit des chocs, même légers, ou qu'il est soumis à des conditions de transport et de stockage difficiles (température élevée ou humidité par exemple) dans sa chaine de distribution.

En d'autres termes, le gaz de la boisson et la pression exercée par la boisson sur le fond du récipient risquent de créer un effort trop important sur les fissurations, pouvant mener à un déchirement (ou dans les cas extrêmes un éclatement) du fond du récipient au niveau des fissurations.

Une mauvaise répartition de la matière dans le fond du récipient ne suffit pas à elle-seule à entraîner la présence de fissurations. D'autres phénomènes ou paramètres, tels ceux listés ci-après, peuvent avoir un rôle influent :
- la matière constitutive de la préforme ;
- le procédé de moulage de la préforme ;
- les conditions de stockage des préformes ;
- les conditions de stockage des récipients remplis ;
- les conditions de la chaine de distribution ;
- l'emploi de lubrifiants et leur nature sur les lignes de production des récipients ;
- la forme du fond des récipients.
En outre, les deux paramètres suivants sont plus particulièrement mis en avant pour expliquer la présence de fissurations dans le fond des récipients formés :
- la qualité de chauffe de la préforme préalablement à sa transformation en récipient ;
- la forme du fond de la préforme.

En effet, il a été démontré que la combinaison entre la forme du fond des préformes et le profil de chauffe, préalable à leur soufflage, avait un impact important sur l'apparition de fissurations dans le fond des récipients formés.

Le profil de chauffe est directement impacté par le dessin, et donc la forme, du fond de la préforme puisqu'une quantité de matière inégale sur le fond de la préforme demandera un profil de chauffe différent pour chaque partie du fond de la préforme.

Pour répondre aux problèmes de qualité de chauffe, des profils de chauffe spécifiques ont été développés qui permettent d'éviter l'apparition de zones dites froides dans les préformes, zones dans lesquelles la matière a du mal à fluer lors du formage des récipients.

Ces profils de chauffe spécifiques mis en place peuvent toutefois engendrer une surconsommation énergétique de l'installation de formage des récipients.

En outre, un profil de chauffe adapté à la fabrication d'un type particulier de récipient n'est pas forcément adapté à d'autres types de récipients, si bien qu'il est nécessaire d'adapter le profil de chauffe à chaque type de récipient à fabriquer. De plus, la modification ou la conception de l'unité de chauffe des préformes peut engendrer un coût important difficilement amortissable.

Concernant la forme de fond des préformes, le document de brevet publié sous le numéro FR 3 045 434 décrit une préforme de récipient en matière plastique, comprenant :
- un corps cylindrique s'étendant selon un axe de révolution de la préforme ;
- un fond fermant le corps cylindrique,
le fond ayant un profil extérieur présentant une portion centrale et une portion courbe joignant la portion centrale au corps cylindrique, la portion centrale présentant, en coupe longitudinale, une section concave.

Une telle forme du fond des préformes permet notamment de limiter les phénomènes de fissuration visibles sur les récipients formés, en optimisant la distribution (autrement dit le fluage) de la matière plastique dans le moule.

Toutefois, d'autres formes de fond des préformes sont notamment étudiés pour permettre une utilisation des préformes pour la fabrication de différents récipients.

En outre, un tel fond de préforme présente un inconvénient en termes de fabrication.

En effet, une telle forme de fond est difficile à obtenir, en outre, la présence d'une forme arrondie concave ne facilite pas le moulage par injection des préformes de sorte qu'il existe un risque important de présence de défauts dans les préformes ainsi injectées. En particulier, de telles formes présentent notamment des contraintes résiduelles pouvant impacter la tenue mécanique des fonds des récipients après formage.

Pour limiter ou éviter la présence de défauts, il pourrait être nécessaire de réduire considérablement les cadences de production des préformes. Cependant, une telle réduction des cadences irait à l'encontre des demandes actuelles des industriels qui souhaitent une augmentation toujours plus importante des cadences et donc une réduction du temps de cycle de fabrication des préformes et/ou des récipients, sans avoir à augmenter la taille de leur parc de machines de fabrication.

Le document EP2316626A1 présente une préforme qui améliore sensiblement les problèmes de fissuration. La préforme possède un fond ayant un profil extérieur présentant une portion centrale et une portion courbe joignant la portion centrale au corps cylindrique, la portion centrale présentant, en coupe longitudinale, une première section concave, la portion courbe présentant successivement, en coupe longitudinale, depuis la première section concave vers le corps cylindrique, une première section convexe ou tronconique, une deuxième section concave et une deuxième section convexe ou tronconique.

Toutefois, la deuxième section convexe, qui de fait est la plus proche du corps de la préforme présente une simple courbure qui n'assure pas une transition progressive entre le corps et la deuxième section concave, de sorte que l'apparition de fissurations n'est toujours pas exclue, le fluage pouvant ne pas être optimal.

L'invention a notamment pour objectif de palier les inconvénients de l'art antérieur.

Plus précisément, l'invention a pour objectif de proposer une préforme dont le fond présente une géométrie évitant la formation de fissurations lors du soufflage d'un récipient.

L'invention a également pour objectif de fournir une telle préforme qui facilite une distribution de la matière dans le moule de fabrication du récipient, de sorte à éviter tout risque de déformation du fond du récipient en sortie du moule.

L'invention a en outre pour objectif de fournir une telle préforme qui n'impacte pas ou très peu les temps de cycle de fabrication, notamment par moulage par injection.

Ces objectifs, ainsi que d'autres qui apparaîtront par la suite, sont atteints grâce à l'invention qui a pour objet une préforme de récipient en matière plastique, comprenant :
- un corps cylindrique s'étendant selon un axe de révolution de la préforme ;
- un fond fermant le corps cylindrique,
le fond ayant un profil extérieur présentant une portion centrale et une portion courbe joignant la portion centrale au corps cylindrique, la portion centrale présentant, en coupe longitudinale, une première section concave, la portion courbe présentant successivement, en coupe longitudinale, depuis la première section concave vers le corps cylindrique, une première section convexe ou tronconique, une deuxième section concave et une deuxième section convexe ou tronconique, caractérisée en ce que la deuxième section, convexe ou tronconique, présentant successivement, en coupe longitudinale, depuis le corps cylindrique vers la deuxième section concave, un premier rayon de courbure, un deuxième rayon de courbure et un troisième rayon de courbure et en en ce qu'elle présente un plan d'intersection défini par la jonction entre le corps cylindrique et le fond, le plan d'intersection étant perpendiculaire à l'axe de révolution de la préforme, et en ce que la valeur du premier rayon de courbure est comprise entre 60% et 100% de la valeur d'un rayon du corps cylindrique mesuré sur le plan d'intersection, et en ce que, en coupe longitudinale, la deuxième section concave présente un retrait, par rapport à un tracé hémisphérique reliant la portion centrale au corps cylindrique, compris entre 1% et 35% d'une épaisseur du corps cylindrique, mesurée sur le plan d'intersection.

Grâce à ce fond, la préforme selon l'invention permet un meilleur fluage de la matière lors du soufflage du récipient.

Par ailleurs, pour les récipients à fond de type pétaloïde, la présence de la deuxième section concave présente un effet à mémoire de forme, c'est-à-dire qu'elle permet de faciliter la création des pieds et d'éviter l'affaissement du fond du récipient dans sa partie centrale.

En effet, la jonction entre la portion centrale du fond et les pieds ayant généralement une forme concave, la deuxième section concave vient s'interposer, dans le moule, entre la portion centrale et les pieds du récipient, ce qui permet d'assurer une continuité entre la portion centrale et les pieds.

En outre, une telle préforme permet d'éviter un affaissement de la zone centrale du fond du récipient en sortie du moule, la zone centrale étant la zone du fond la plus épaisse et donc la plus malléable (à cause de son inertie thermique) en sortie du moule.

En d'autres termes, la présence de la deuxième section concave permet d'éviter une jonction angulaire entre les pieds et la portion centrale, dans laquelle la matière aurait du mal à fluer provoquant alors la présence de fissurations dans le fond du récipient soufflé.

Par ailleurs, cette deuxième section concave permet d'utiliser une « fonction mémoire » du PET afin de limiter l'affaissement du fond du récipient en sortie de moule, et donc limiter, voire supprimer l'apparition de fissurations.

La succession des rayons de courbure facilite le fluage de la matière contre les parois du fond de moule de formage des récipients et autorise notamment une bonne formation des pieds des récipients, les pieds ayant un rôle essentiel dans la tenue du récipient sur un plan de pose.

Afin d'obtenir des bonnes conditions de soufflage et notamment un bon fluage de la matière, on choisira, de préférence, les valeurs dimensionnelles ci-dessous :
- la valeur du premier rayon de courbure est préférentiellement égale à 77%, de la valeur d'un rayon du corps cylindrique mesuré sur le plan d'intersection ;
- la valeur du deuxième rayon de courbure est inférieure ou égale à la valeur d'un diamètre du corps cylindrique mesuré sur le plan d'intersection ;
- la deuxième section concave présente un point de pénétration maximal dans la préforme, situé à une distance de l'axe de révolution de la préforme, comprise entre 20% et 40%, et préférentiellement égale à 25%, d'un diamètre du corps cylindrique mesuré sur le plan d'intersection ;
- en coupe longitudinale, la deuxième section concave présente un retrait, par rapport à un tracé hémisphérique reliant la portion centrale au corps cylindrique, compris entre 1% et 35%, et préférentiellement de 20%, d'une épaisseur du corps cylindrique, mesurée sur le plan d'intersection :
- la première section convexe ou tronconique présente un quatrième rayon de courbure égal à la moitié du premier rayon de courbure de la deuxième section convexe ou tronconique.

Avantageusement, le fond présente un profil intérieur définissant avec la deuxième section concave une réduction de l'épaisseur du fond.

La réduction d'épaisseur favorise également le fluage de la matière. En effet, moins la préforme est épaisse et plus la matière peut être étirée axialement et radialement (par rapport à son axe de révolution) grâce à l'air sous pression et/ou à l'étirement par la tige d'étirage.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue schématique en coupe d'une préforme selon l'invention ;
- la figure 2 est une vue de détail en coupe, à échelle agrandie, d'un fond de la préforme selon l'invention ;
- la figure 3 est une vue de détail, à échelle agrandie, d'une portion du profil extérieur du fond de la préforme selon l'invention ;
- la figure 4 est une vue schématique en coupe d'un fond pétaloïde de récipient obtenu à partir d'une préforme selon l'invention.

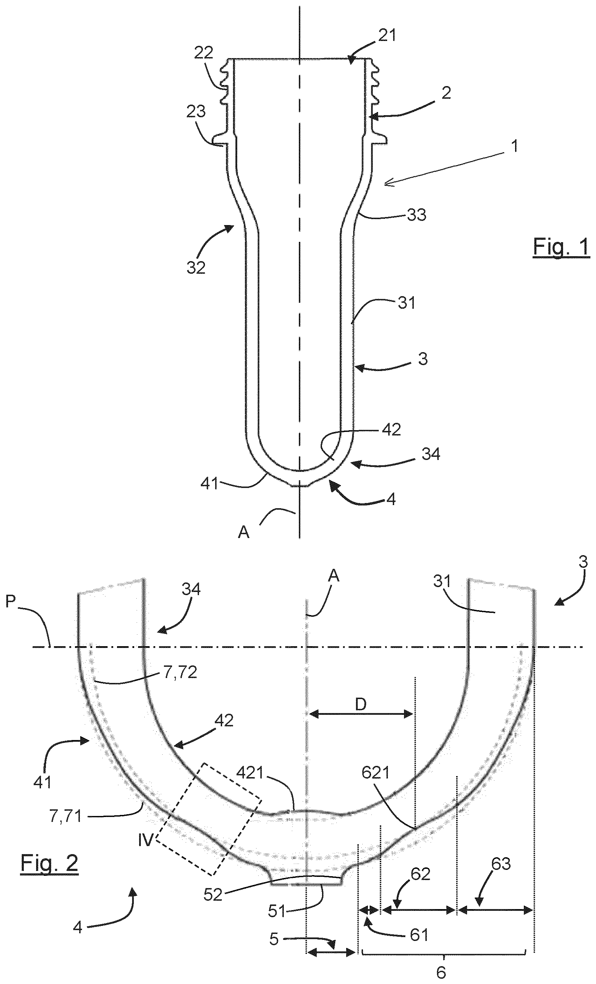

Sur la figure 1 est représentée une préforme 1 (également appelée ébauche dans certains documents de brevets ou dans la littérature spécialisée du domaine) pour la réalisation d'un récipient par soufflage ou étirage-soufflage dans une unité de formage. La préforme 1 est réalisée dans un matériau thermoplastique tel que du Polyéthylène Téréphtalate (PET), ce matériau étant susceptible, après avoir été préalablement chauffé, d'être soufflé à l'aide d'un fluide sous pression, typiquement de l'air, pour s'étirer et venir s'appliquer contre les parois d'un moule (non représenté) à la forme du récipient final.

La préforme 1 s'étend le long un axe de révolution A et comprend, depuis une extrémité supérieure jusqu'à une extrémité inférieure :
- un col 2 ;
- un corps 3, cylindrique ;
- un fond 4.

Le col 2 présente une extrémité supérieure définissant un buvant 21 du récipient final. De manière générale, le col 2 est la partie de la préforme qui conserve sa géométrie et ses dimensions tout au long du cycle de formage des récipients. En d'autres termes, le col 2 n'est pas destiné à être déformé une fois que la préforme 1 est obtenue, généralement par moulage par injection.

Sous le buvant 21, le col 2 présente un filetage 22 destiné à recevoir des moyens de bouchage du récipient une fois celui-ci formé et rempli d'un contenu. En lieu et place du filetage 22, le col 2 peut être pourvu d'un bourrelet pour recevoir une capsule de fermeture.

Le col 2 est relié au corps 3 cylindrique par l'intermédiaire d'une collerette 23, qui permet notamment le transport de la préforme 1 depuis une trémie de chargement jusqu'à un moule d'une unité de soufflage en passant par un four pour ramollir la matière de la préforme 1 et faciliter le formage du récipient. La collerette 23 permet par ailleurs le transport du récipient dans des phases ultérieures à sa formation.

Le corps 3 cylindrique est formé d'une paroi 31 cylindrique de révolution autour de l'axe de révolution A de la préforme 1. A une extrémité supérieure 32, le corps 3 cylindrique présente un épaulement 33 allant en s'évasant vers le buvant 21. L'épaulement 33 assure notamment la jonction entre le corps 3 cylindrique et le col 2 de la préforme.

A une extrémité inférieure 34, le corps 3 cylindrique est prolongé par le fond 4 qui vient fermer la préforme 1. La jonction entre le corps 3 cylindrique et le fond 4 forme un plan d'intersection P, sensiblement perpendiculaire à l'axe de révolution A de la préforme (figure 2).

Le fond 4 présente un profil extérieur 41 de la préforme 1 et un profil intérieur 42 de la préforme 1.

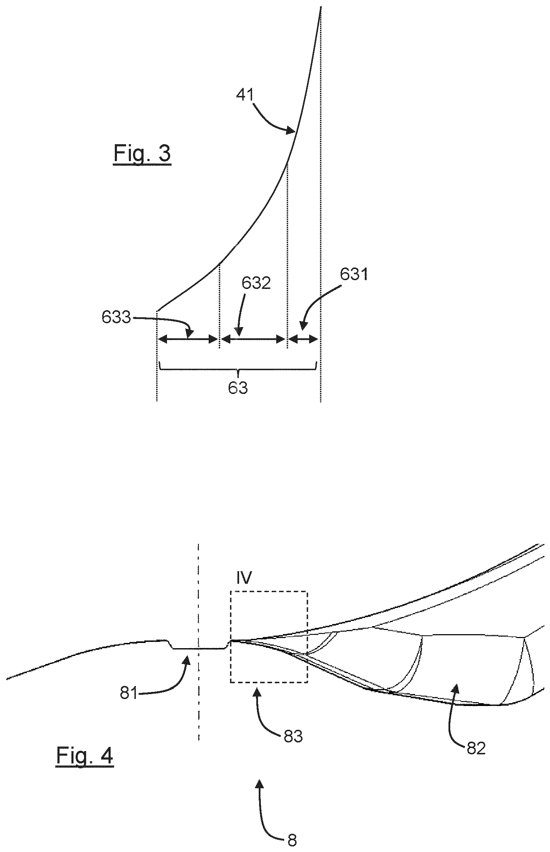

En référence aux figures 2 et 3, le profil extérieur 41 de la préforme 1 comprend une portion centrale 5 et une portion courbe 6 joignant la portion centrale 5 au corps 3 cylindrique1.

Selon une vue en coupe longitudinale, comme représenté sur la figure 2, la portion centrale 5 présente, depuis l'axe de révolution A de la préforme 1 vers le corps 3 cylindrique :
- une pastille 51 (causée par l'injection de matière dans le moule de formage des préformes 1) ;
- une première section concave 52, entre la pastille 51 et la portion courbe 6.

La pastille 51 (également appelée point d'injection) est notamment due à la présence d'un obturateur par lequel la matière plastique ramollie est injectée dans le moule de fabrication des préformes 1. Cet obturateur forme une cavité dans le moule d'injection, en retrait du plan hémisphérique de fond du moule, qui explique la présence de la pastille, qui forme une surépaisseur du fond 4 vers l'extérieur de la préforme.

La portion courbe 6, quant à elle, présente successivement, selon le principe de l'invention, depuis la première section concave 52 vers le corps 3 cylindrique :
- une première section convexe ou tronconique 61 ;
- une deuxième section concave 62 ;
- une deuxième section convexe ou tronconique 63.

Il est précisé qu'une section concave s'entend d'une section qui forme, par rapport à une tangente à la jonction entre la section immédiatement précédente et la forme concave, et à une tangente à la jonction entre la section immédiatement suivante et la forme concave, un retrait de matière. Ainsi, peut être considérée comme une section concave une portion tronconique positionnée entre deux sections convexes.

En référence à la figure 3, la deuxième section convexe ou tronconique 63 présente successivement, depuis le corps 3 cylindrique vers la deuxième section concave 62, un premier rayon de courbure 631, un deuxième rayon de courbure 632 et un troisième rayon de courbure 633.

Avantageusement, le premier rayon de courbure 631 est compris entre 60% et 100% d'un rayon du corps 3 cylindrique mesuré sur le plan d'intersection P.

A titre d'exemple, pour une préforme 1 comprenant un rayon du corps 3 cylindrique de 13 mm, mesuré sur le plan d'intersection P, le premier rayon de courbure 631 est au minimum de 7,8 mm et au maximum de 13 mm.

De préférence le premier rayon de courbure 631 est compris entre 75% et 80% du rayon du corps 3 cylindrique mesuré sur le plan d'intersection P.

Plus préférentiellement encore, la valeur cible du premier rayon de courbure 631 est de 77% du rayon du corps 3 cylindrique mesuré sur le plan d'intersection P, soit 7,7 mm pour un rayon du corps 3 cylindrique de 10 mm.

Selon un mode de réalisation particulièrement avantageux, le deuxième rayon de courbure 632 est inférieur ou égal à un diamètre du corps 3 cylindrique mesuré sur le plan d'intersection.

Avantageusement encore, la deuxième section concave 62 présente un point de pénétration maximal 621 dans la préforme 1, situé à une distance D de l'axe de révolution A, comprise entre 20% et 40% du diamètre du corps 3 cylindrique mesuré sur le plan d'intersection P.

De préférence, le point de pénétration maximal 621 dans la préforme 1 est situé à une distance D de l'axe de révolution A, égale à 25% du diamètre du corps 3 cylindrique.

La deuxième section concave 62 présente un retrait, par rapport à un tracé hémisphérique 7 reliant la portion centrale 5 au corps 3 cylindrique, compris entre 1% et 35% de l'épaisseur du corps 3 cylindrique, mesurée sur le plan d'intersection P.

Tel qu'illustré sur la figure 2, le tracé hémisphérique 7 comprend une première ligne 71 définissant le retrait égal à 1% de l'épaisseur du corps 3 cylindrique, et une deuxième ligne 72 définissant le retrait selon le mode de réalisation préféré illustré, soit un retrait égal à 20 % de l'épaisseur du corps 3 cylindrique.

Comme illustré sur la figure 2, la deuxième section concave 62 présente un retrait égal à 20% de l'épaisseur du corps 3 cylindrique, le retrait maximal étant notamment atteint au point de pénétration maximal 621.

Avantageusement, la première section convexe ou tronconique 61 présente un quatrième rayon de courbure égal à la moitié du premier rayon de courbure 631 de la deuxième section convexe ou tronconique 63.

Tel qu'illustré sur la figure 2 notamment, le profil intérieur 42 définit, avec la deuxième section concave 62 une réduction de l'épaisseur du fond 4.

Selon le mode de réalisation illustré en figure 2, le profil intérieur 42 est du type hémisphérique et présente en son centre une bosse 421 formant une réserve de matière utile notamment lorsque la préforme est étirée par une tige lors du formage, afin d'éviter une réduction d'épaisseur de matière néfaste à la tenue mécanique du récipient formé.

En variante non représentée, le profil intérieur 42 pourrait comprendre, en regard de la deuxième section concave 62 du profil extérieur 41, une section concave (présentant un rayon supérieur à celui de la deuxième section concave 62), une section tronconique ou une section convexe, ou toute combinaison de rayons de courbures convexes et/ou concaves et de portions tronconiques.

La figure 4 illustre un fond de récipient 8 qui présente une portion centrale 81 de forme convexe, et des pieds 82 (un seul étant représenté) qui s'étendent sur une périphérie radialement externe à la portion centrale 81.

Les pieds 82 sont reliés à la portion centrale 81 par l'intermédiaire d'une portion concave 83 formée par la deuxième section concave 62 du fond 4 de la préforme 1 (encadrés IV sur les figures 2 et 4).

Lors du soufflage de la préforme 1 dans un moule afin de former le récipient final, le fond 4 de la préforme 1 se déforme pour venir épouser les parois du moule. La deuxième section concave 62, grâce à la mémoire de forme du PET, conserve sa concavité de sorte à épouser parfaitement le fond du moule et à définir la portion concave 83 du fond de récipient 8.

Grâce à la présence de la deuxième section concave 62 de la préforme 1, le fond de récipient 8 conserve sa forme en sortie de moule. En d'autres termes, la deuxième section concave 62 empêche un affaissement (également appelé déroulement) de la portion centrale 81 du fond de récipient 8 vers les pieds 82 à l'issue de la fabrication du récipient. Un tel affaissement serait nuisible au récipient en termes de tenue mécanique, de stabilité et d'esthétisme.

## Revendications

1. Préforme (1) de récipient en matière plastique, comprenant :
- un corps (3) cylindrique s'étendant selon un axe de révolution (A) de la préforme ;
- un fond (4) fermant le corps (3) cylindrique,
le fond (4) ayant un profil extérieur (41) présentant une portion centrale (5) et une portion courbe (6) joignant la portion centrale (5) au corps (3) cylindrique, la portion centrale (5) présentant, en coupe longitudinale, une première section concave (52), la portion courbe (6) présentant successivement, en coupe longitudinale, depuis la première section concave (52) vers le corps (3) cylindrique, une première section convexe ou tronconique (61), une deuxième section concave (62) et une deuxième section convexe ou tronconique (63), **caractérisée en ce que** la deuxième section convexe ou tronconique (63) présente successivement, en coupe longitudinale, depuis le corps (3) cylindrique vers la deuxième section concave (62), un premier rayon de courbure (631), un deuxième rayon de courbure (632) et un troisième rayon de courbure (633) et **en ce qu'**elle présente un plan d'intersection (P) défini par la jonction entre le corps (3) cylindrique et le fond (4), le plan d'intersection (P) étant perpendiculaire à l'axe de révolution (A) de la préforme (1), **en ce que** la valeur du premier rayon de courbure (631) est comprise entre 60% et 100% de la valeur d'un rayon du corps (3) cylindrique mesuré sur le plan d'intersection (P), et **en ce que**, en coupe longitudinale, la deuxième section concave (62) présente un retrait, par rapport à un tracé hémisphérique (7) reliant la portion centrale (5) au corps (3) cylindrique, compris entre 1% et 35% d'une épaisseur du corps (3) cylindrique, mesurée sur le plan d'intersection (P).

2. Préforme (1) selon la revendication 1, **caractérisée en ce que** la valeur du premier rayon de courbure (631) est égale à 77% de la valeur du rayon du corps (3) cylindrique mesuré sur le plan d'intersection (P).

3. Préforme (1) selon la revendication 1, **caractérisée en ce qu'**elle présente un plan d'intersection (P) entre le corps (3) cylindrique et le fond (4), le plan d'intersection (P) étant perpendiculaire à l'axe de révolution (A) de la préforme (1), et **en ce que** la valeur du deuxième rayon de courbure (632) est inférieure ou égale à la valeur d'un diamètre du corps (3) cylindrique mesuré sur le plan d'intersection (P).

4. Préforme (1) selon l'une quelconque des revendications précédentes, **caractérisée en ce que** la deuxième section concave (62) présente un point de pénétration maximal (621) dans la préforme (1), situé à une distance de l'axe de révolution (A) de la préforme (1), comprise entre 20% et 40% d'un diamètre du corps (3) cylindrique mesuré sur le plan d'intersection (P).

5. Préforme (1) selon la revendication 4, **caractérisée en ce que** le point de pénétration maximal (621) dans la préforme (1) est situé à une distance de l'axe de révolution (A) de la préforme (1) égale à 25% du diamètre du corps (3) cylindrique mesuré sur le plan d'intersection (P).

6. Préforme (1) selon l'une quelconque des revendications précédentes, **caractérisée en ce que** le retrait de la deuxième section concave (62), par rapport au tracé hémisphérique (7) reliant la portion centrale (5) au corps (3) cylindrique, est de 20 % de l'épaisseur du corps (3) cylindrique, mesurée sur le plan d'intersection (P).

7. Préforme (1) selon la revendication 1 ou la revendication 2, **caractérisée en ce que** la première section convexe ou tronconique (61) présente un quatrième rayon de courbure égal à la moitié du premier rayon de courbure (631) de la deuxième section convexe ou tronconique (63).

8. Préforme (1) selon l'une quelconque des revendications précédentes, **caractérisée en ce que** le fond (4) présente un profil intérieur (42) définissant avec la deuxième section concave (62) une réduction de l'épaisseur du fond (4).

## Patentansprüche

1. Vorform (1) für einen Behälter aus Kunststoff, beinhaltend:
- einen zylindrischen Körper (3), der sich gemäß einer Rotationsachse (A) der Vorform erstreckt;
- einen Boden (4), der den zylindrischen Körper (3) verschließt,
wobei der Boden (4) ein Außenprofil (41) aufweist, das einen mittigen Abschnitt (5) und einen gekrümmten Abschnitt (6), der den mittigen Abschnitt (5) mit dem zylindrischen Körper (3) verbindet, aufweist, wobei der mittige Abschnitt (5) im Längsschnitt einen ersten konkaven Teilabschnitt (52) aufweist, wobei der gekrümmte Abschnitt (6) im Längsschnitt von dem ersten konkaven Teilabschnitt (52) zu dem zylindrischen Körper (3) hin nacheinander einen ersten konvexen oder kegelstumpfförmigen Teilabschnitt (61), einen zweiten konkaven Teilabschnitt (62) und einen zweiten konvexen oder kegelstumpfförmigen Teilabschnitt (63) aufweist, **dadurch gekennzeichnet, dass** der zweite konvexe oder kegelstumpfförmige Teilabschnitt (63) im Längsschnitt von dem zylindrischen Körper (3) zu dem zweiten konkaven Teilabschnitt (62) hin nacheinander einen ersten Krümmungsradius (631), einen zweiten Krümmungsradius (632) und einen dritten Krümmungsradius (633) aufweist und dass er eine Schnittebene (P) aufweist, die durch die Verbindung zwischen dem zylindrischen Körper (3) und dem Boden (4) definiert wird, wobei die Schnittebene (P) zu der Rotationsachse (A) der Vorform (1) senkrecht ist, dass der Wert des ersten Krümmungsradius (631) zwischen 60 % und 100 % des Werts eines in der Schnittebene (P) gemessenen Radius des zylindrischen Körpers (3) beträgt und dass der zweite konkave Teilabschnitt (62) im Längsschnitt in Bezug auf einen halbkugelförmigen Verlauf (7), der den mittigen Abschnitt (5) mit dem zylindrischen Körper (3) verbindet, einen Rücksprung zwischen 1 % und 35 % einer in der Schnittebene (P) gemessenen Dicke des zylindrischen Körpers (3) aufweist.

2. Vorform (1) nach Anspruch 1, **dadurch gekennzeichnet, dass** der Wert des ersten Krümmungsradius (631) 77 % des Werts des in der Schnittebene (P) gemessenen Radius des zylindrischen Körpers (3) beträgt.

3. Vorform (1) nach Anspruch 1, **dadurch gekennzeichnet, dass** sie eine Schnittebene (P) zwischen dem zylindrischen Körper (3) und dem Boden (4) aufweist, wobei die Schnittebene (P) zu der Rotationsachse (A) der Vorform (1) senkrecht ist, und dass der Wert des zweiten Krümmungsradius (632) kleiner als oder gleich dem Wert eines in der Schnittebene (P) gemessenen Durchmessers des zylindrischen Körpers (3) ist.

4. Vorform (1) nach einem der vorhergehenden Ansprüche, **dadurch gekennzeichnet, dass** der zweite konkave Teilabschnitt (62) einen Punkt maximaler Eindringung (621) in die Vorform (1) aufweist, der sich in einem Abstand zu der Rotationsachse (A) der Vorform (1) befindet, der zwischen 20 % und 40 % eines in der Schnittebene (P) gemessenen Durchmessers des zylindrischen Körpers (3) beträgt.

5. Vorform (1) nach Anspruch 4, **dadurch gekennzeichnet, dass** sich der Punkt maximaler Eindringung (621) in die Vorform (1) in einem Abstand zu der Rotationsachse (A) der Vorform (1) befindet, der 25 % des in der Schnittebene (P) gemessenen Durchmessers des zylindrischen Körpers (3) beträgt.

6. Vorform (1) nach einem der vorhergehenden Ansprüche, **dadurch gekennzeichnet, dass** der Rücksprung des zweiten konkaven Teilabschnitts (62) in Bezug auf den halbkugelförmigen Verlauf (7), der den mittigen Abschnitt (5) mit dem zylindrischen Körper (3) verbindet, 20 % der in der Schnittebene (P) gemessenen Dicke des zylindrischen Körpers (3) beträgt.

7. Vorform (1) nach Anspruch 1 oder Anspruch 2, **dadurch gekennzeichnet, dass** der erste konvexe oder kegelstumpfförmige Teilabschnitt (61) einen vierten Krümmungsradius aufweist, der gleich der Hälfte des ersten Krümmungsradius (631) des zweiten konvexen oder kegelstumpfförmigen Teilabschnitts (63) ist.

8. Vorform (1) nach einem der vorhergehenden Ansprüche, **dadurch gekennzeichnet, dass** der Boden (4) ein Innenprofil (42) aufweist, das mit dem zweiten konkaven Teilabschnitt (62) eine Reduzierung der Dicke des Bodens (4) definiert.

## Claims

1. Container preform (1) made of plastics material, comprising:
- a cylindrical body (3) extending along an axis of revolution (A) of the preform;
- a bottom (4) closing the cylindrical body (3),
the bottom (4) having an outer profile (41) that has a central portion (5) and a curved portion (6) joining the central portion (5) to the cylindrical body (3), the central portion (5) having, in longitudinal section, a first concave section (52), the curved portion (6) having in succession, in longitudinal section, from the first concave section (52) towards the cylindrical body (3), a first convex or frustoconical section (61), a second concave section (62) and a second convex or frustoconical section (63), **characterized in that** the second convex or frustoconical section (63) has in succession, in longitudinal section, from the cylindrical body (3) towards the second concave section (62), a first radius of curvature (631), a second radius of curvature (632) and a third radius of curvature (633) and **in that** it has a plane of intersection (P) defined by the junction between the cylindrical body (3) and the bottom (4), the plane of intersection (P) being perpendicular to the axis of revolution (A) of the preform (1), **in that** the value of the first radius of curvature (631) is between 60% and 100% of the value of a radius of the cylindrical body (3) measured on the plane of intersection (P), and **in that**, in longitudinal section, the second concave section (62) has a setback, with respect to a hemispherical outline (7) connecting the central portion (5) to the cylindrical body (3), of between 1% and 35% of a thickness of the cylindrical body (3), measured on the plane of intersection (P).

2. Preform (1) according to Claim 1, **characterized in that** the value of the first radius of curvature (631) is equal to 77% of the value of the radius of the cylindrical body (3) measured on the plane of intersection (P).

3. Preform (1) according to Claim 1, **characterized in that** it has a plane of intersection (P) between the cylindrical body (3) and the bottom (4), the plane of intersection (P) being perpendicular to the axis of revolution (A) of the preform (1), and **in that** the value of the second radius of curvature (632) is less than or equal to the value of a diameter of the cylindrical body (3) measured on the plane of intersection (P).

4. Preform (1) according to any one of the preceding claims, **characterized in that** the second concave section (62) has a point (621) of maximum penetration into the preform (1), situated at a distance from the axis of revolution (A) of the preform (1) of between 20% and 40% of a diameter of the cylindrical body (3) measured on the plane of intersection (P).

5. Preform (1) according to Claim 4, **characterized in that** the point (621) of maximum penetration into the preform (1) is situated at a distance from the axis of revolution (A) of the preform (1) that is equal to 25% of the diameter of the cylindrical body (3) measured on the plane of intersection (P).

6. Preform (1) according to any one of the preceding claims, **characterized in that** the setback of the second concave section (62), with respect to the hemispherical outline (7) connecting the central portion (5) to the cylindrical body (3), is 20% of the thickness of the cylindrical body (3), measured on the plane of intersection (P).

7. Preform (1) according to Claim 1 or Claim 2, **characterized in that** the first convex or frustoconical section (61) has a fourth radius of curvature equal to half the first radius of curvature (631) of the second convex or frustoconical section (63).

8. Preform (1) according to any one of the preceding claims, **characterized in that** the bottom (4) has an inner profile (42) that defines, with the second concave section (62), a reduction in the thickness of the bottom (4).
